Europäisches Patentamt

European Patent Office

Office européen des brevets

(19)

(11) Publication number: **0 199 399**
**B1**

(12) # EUROPEAN PATENT SPECIFICATION

(45) Date of publication of the patent specification:
22.08.90

(51) Int. Cl.⁵: **B01J 21/04,** B01J 21/06,
B01J 32/00, C10G 45/04

(21) Application number: **86200542.8**

(22) Date of filing: **01.04.86**

(54) Improved hydroconversion catalyst and process.

(30) Priority: **24.04.85 US 726852**

(43) Date of publication of application:
**29.10.86 Bulletin 86/44**

(45) Publication of the grant of the patent:
**22.08.90 Bulletin 90/34**

(84) Designated Contracting States:
**BE DE FR GB NL**

(56) References cited:
**US-A- 4 018 714**
**US-A- 4 382 854**
**US-A- 4 440 631**
**US-A- 4 465 790**

(73) Proprietor: **SHELL INTERNATIONALE RESEARCH MAATSCHAPPIJ B.V., Carel van Bylandtlaan 30,
NL-2596 HR Den Haag(NL)**

(72) Inventor: **Hamilton, David, Jr., 15906 Sierra Grande Drive,
Houston Texas 77083(US)**
Inventor: **Adams, Charles Terrell, 739 Bison, Houston
Texas 77079(US)**

(74) Representative: **Spierenburg, Jan et al, P.O. Box 302,
NL-2501 CH 's-Gravenhage(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to a hydroconversion catalyst having improved properties with respect to hydrodenitrification (HDN) and hydrodesulphurization (HDS) activity. The invention also relates to a hydroconversion process using an improved catalyst.

Considerable research has been undertaken to develop and commercialize new, cost effective, highly active hydroconversion catalysts for large volume first stage hydrocracking and catalytic cracking feed hydrotreating applications. The inclusion of significant amounts of 535°C+ residual components, including cracked stocks, in the hydrocarbon feeds to these processes has created severe activity and stability problems for the catalysts currently being used commercially. Feedstocks frequently contain large amounts of nitrogen and/or sulphur compounds which must be removed in the hydroconversion process. Currently the most active catalysts with hydrodenitrification and/or hydrodesulphurization activity comprise nickel-molybdenum, nickel-tungsten, and cobalt-molybdenum supported on a gamma alumina carrier.

The use of alumina-titania supports for such catalysts is disclosed by Katzer et al. in "Development of Superior Denitrogenation and Isomerization Catalysts for Processing Crude Oil from Shale", Part II; Interim Report; Department of Chemical Engineering; University of Delaware, 1981. According to this reference, these supports are prepared by the co-precipitation of aluminium- and titanium-containing materials. Co-precipitation, however, is an extremely expensive process and it would be desirable to find more commercially suitable methods for preparing these catalysts. Preparation of alumina-titania supports by forming an intimate mixture of alumina hydrate and titania hydrate followed by extrusion is disclosed in U.S. Patent 4 382 854. It has now been found that when alpha alumina monohydrate is mulled with titanium dioxide in the presence of a selected amount of acetic acid, a carrier is produced that when used as basis for hydroconversion catalyst(s) containing nickel/cobalt/molybdenum/tungsten, such catalyst(s) have improved hydrodenitrification and hydrodesulphurization properties.

The present invention thus relates to a hydrocarbon conversion catalyst with improved hydrodenitrification and hydrodesulphurization activity comprising one each of molybdenum or tungsten and of cobalt and/or nickel incorporated into a titania-containing gamma alumina support which is prepared by a) mulling alpha aluminium monohydrate, titanium dioxide in a molar ratio of $Al_2O_3$; $TiO_2$ ranging from 3:1 to 15:1, acetic acid in a concentration ranging from 2.5 parts to 3.5 parts of acetic acid per 100 parts of $Al_2O_3$ and sufficient water to provide an extrudable mixture, b) extruding the mulled mixture to produce an extrudate and c) drying and calcining the extrudate of step b at a temperature ranging from 400°C to 800°C.

The key to providing hydrocarbon conversion catalysts with improved hydrodenitrification and improved hydrodesulphurization activity involves the use of a special titania-containing gamma alumina support.

Basically the process for preparing the instant support comprises mulling together 4 components: alpha aluminium monohydrate, titanium dioxide, acetic acid, and water; extruding the mulled material; drying and calcining the extruded material.

The mulling procedure involves the addition of alpha alumina monohydrate powder and titanium dioxide powder to a mulling machine. The dried powders are frequently premixed at this point. Then, water and acetic acid are added to the powders in the muller and the entire mix is mulled for sufficient time to provide a plasticized mix suitable for extruding. The amount of alpha aluminium monohydrate and titanium dioxide utilized will typically range from 3:1 to 15:1, preferably from 5:1 to 12:1 molar ratio of $Al_2O_3:TiO_2$. The amount of acetic acid utilized will range from 2.5 to 3.5 parts of acetic acid per 100 parts of $Al_2O_3$. The amount of acetic acid added appears to be critical in the production of hydroconversion catalysts in accordance with the present invention. Insufficient acetic acid will not provide for sufficient peptization to allow the mixture to be extruded. Excess acetic acid apparently affects the pore volume distribution of the material such that unsatisfactory catalysts are obtained. The amount of water added is sufficient to allow an extrudable mass to be produced. The amount added will depend on many extruder variables, such as die size, extrusion pressure and the like. The amount of water to be added can generally be obtained using routine experimentation with the extruder apparatus involved. Typically the loss on ignition (LOI) is of the order of 50 to 60% by weight. The mulling times utilized are generally long enough to provide a homogeneous plasticized mass. Times are not critical and are determined normally by routine experimentation utilizing the extruding apparatus. Times will typically range from .1 to 10 hours. After mulling the material is extruded, dried and calcined. Drying temperatures are not critical and typically range from 50 to 150°C. The drying conditions should be sufficient to substantially reduce the water content of the material sufficiently so that excessive evaporation and production of steam upon subsequent calcination does not result in decrepitation of the extruded material. After drying the material is calcined, typically at a temperature ranging from 400 °C to 800 °C. The duration of calcination generally lasts for at least one hour and typically ranges from 1 to 10 hours. In many cases the drying and heating step can be combined in one step wherein the temperature is gradually increased over a period of time to allow the material to dry and then further increased to the calcination temperature.

After calcination the catalyst carrier is then ready to be impregnated with the suitable catalytically active metals. Impregnation techniques as utilized herein are conventional. An aqueous solution is prepared of a compound of molybdenum or tungsten and of cobalt and/or nickel and utilized to impregnate the carrier. Exemplary of the molybdenum or tungsten compounds which can be used to prepare the impregnating solution are ammonium heptamolybdate, ammonium dimolybdate, molybdic acid, molybdic oxide, molybdenum blue, ammonium metatungstate, ammonium paratungstate, tungstic acid, tungstic oxide and the like. Exemplary of the nickel and/or cobalt compounds suitable for use in the impregnating solution are salts such as the nitrates, sulphates, sulphides, fluorides, chlorides, bromides, phosphates, acetates, and the carbonates, salts of ammonium complexes and the like. Suitable solubilizing agents may be added to the impregnating solution to aid in the dissolution of the metal compounds such as for example acids, bases such as ammonia, the amines and the like.

In preparing catalysts in accordance with the present invention, it is frequently desirable to add a stabilizing amount of phosphorus. This is conveniently added by adding a phosphorus compound to the impregnating solution. Exemplary of phosphorus compounds are the phosphorus acids such as orthophosphoric, metaphosphoric, pyrophosphoric, phosphoric acids and salts of these acids such as ammonium and ammonium hydrogen salts. When utilized, phosphorus is suitably present in an amount of 0.2-1 mole of phosphorus per mole of molybdenum or tungsten.

The impregnation should be sufficient to deposit from 1 to 5 per cent by weight cobalt and/or nickel, and particularly from 2.5 to 4 per cent by weight cobalt and/or nickel and from 10 to 16 per cent by weight molybdenum or from 10 to 32 per cent by weight tungsten.

As a general rule, the amount of impregnating solution applied to the titania containing support should be sufficient to at least substantially fill the pore volume of the composition. A slight excess may be utilized in order to effect deposition of the greatest amount of active constituents in a single step. However, it is not necessary, within the concept of this invention, that the total amount of active constituents be added to the support in a single impregnating step. As a result the impregnation can be effected by sequential spraying and intermittent drying of the oxide support or by sequential dipping of the support into a relatively dilute solution of the active ingredients. Preferred, however, is the single step impregnation wherein the amount of impregnating solution is substantially equivalent to the pore volume of a composition to be impregnated.

After impregnation the catalyst material is then dried and calcined at a temperature ranging from 400 °C to 800 °C. Drying here again is not critical and must be sufficient to remove enough water such that the catalyst does not decrepitate upon calcination. The drying and the calcining may be combined in one step.

In their active form, metal constituents contained in the catalyst compositions of this invention should be in the form of either the free metals, the oxides or corresponding sulphides, the sulphided form being particularly preferred. The metal constituents are of course converted to the corresponding oxide upon calcination in an oxidizing atmosphere. If the corresponding metal form is desired, reduction of the oxide subsequent to calcination by contacting with a reducing atmosphere such as carbon monoxide, hydrogen and the like, can be easily effected by procedures generally well known in the art. Conversion of the calcined oxide form to the preferred sulphide form can be easily effected by contacting the calcined composition with a sulphiding medium such as hydrogen sulphide, carbon disulphide, elemental sulphur, thioethers and thiols containing up to 8 carbon atoms per molecule. In most instances it is preferred that the sulphur donor be contacted with the oxide or free metal form of the active metal in the presence of hydrogen. Sulphiding can be effected by simply contacting with the sulphur donor. However, it is presently preferred that the calcined catalyst be contacted with a dilute form of the sulphiding agent such as a stream of 50 per cent or less hydrogen sulphide in hydrogen. Temperatures involved in these procedures can vary considerably and are usually within the range of from ambient temperature up to 370 °C. Sulphiding with carbon disulphide or hydrocarbon sulphur donors such as the thioethers and thiols, is often conveniently effected by dissolving the sulphur donor in a solvent and contacting the calcined composition with the resultant solution. The most suitable and readily available solvents are the relatively low boiling hydrocarbons such as benzene and kerosene and include aromatic, aliphatic, arylalkyl and alkylaryl hydro carbons usually containing less than about 10 carbon atoms per molecule. However, certain limitations on sulphiding temperature should be observed when employing such hydrocarbon solvents in view of the fact that some hydrocracking will of course occur if the temperature exceeds the incipient cracking temperature during the sulphiding step. Contacting of the catalyst composition with a sulphiding medium should be contained for a period sufficient to convert a substantial proportion of the active metal oxide to the corresponding sulphide. The rate of sulphiding will of course depend upon the concentration of the sulphiding medium and the temperature at which sulphiding is effected. Optimum conditions can be easily determined empirically. However, contact times of at least about 10 minutes should be employed under any circumstances and are usually within the range of 30 minutes to 10 hours. It should also be observed that the compositions in accordance with the present invention can also be sulphided in situ by contacting with the hydrocarbon feed containing organosulphur compounds, particularly thiols and thioethers which are known to be present in many hydrocarbon process streams.

Suitable hydroconversion conditions for processes using improved catalysts according to the present invention are as follows: a temperature of 350-420 °C; a total pressure of 75-200 bar; a partial hydrogen pressure of 60-200 bar; a space velocity of 0.4-1.5 kg oil/l catalyst/hour; and a hydrogen feed rate of 250-2500 N1/kg oil feed. The hydrodenitrification and hydrodesulphurization of a heavy oil feed according to the present process is preferably carried out under the following conditions: a temperature of 260-410 °; a total pressure of 100-150 bar; a partial hydrogen pressure of 80-150 bar; a space velocity of 0.4-1.0 kg oil/l catalyst/hour; and a hydrogen feed rate of 500-1500 N1/kg oil feed. The hydrogen applied can be pure hydrogen or a hydrogen-containing gas, preferably one comprising more than 70% of hydrogen. The hydrogen-containing gas may also contain up to about 10% of hydrogen sulphide.

The present invention also relates to hydroconversion processes using improved catalysts as described hereinbefore, in particular to hydrodenitrification and hydrodesulphurization processes.

The invention will now be illustrated by means of the following Examples.

Example 1

Preparation of the titania support

800 g of alpha alumina monohydrate powder and 69.7 g of titanium dioxide powder (Rutile from Titinox Corporation) were added to a countercurrent batch muller and premixed dry for 30 minutes. Then 630 g of water and 24 g of acetic acid were added to the muller over a 2 minute period and this mixture was mulled for 30 minutes. An additional 71 g of water were added to the mixture and mulling was continued for an additional 15 minutes. The material was then extruded and dried at 150 °C for 12 hours. It was then calcined for 2 hours at 566 °C.

Catalyst preparation

15.36 g of ammonium dimolybdate were mixed with 33 ml of 24 per cent ammonium hydroxide and this was heated to 32 °C. 3.78 g of nickel(II) carbonate were added to the thus prepared solution. This impregnating solution was then utilized to impregnate 50 g of the carrier prepared as described hereinabove. The impregnated carrier was dried at 120 °C in a vacuum for 12 hours. After drying the catalyst was calcined at 480 °C for 1 hour in air. The catalyst was then activated by contacting it with a hydrogen-hydrogen sulphide stream at 200 °C for 2 hours, 260 °C for 1 hour and finally at 370 °C for 2 hours (catalyst 1).

Comparative Example A

A catalyst was prepared similar to that described in Example 1 except that no titania was added to the alpha alumina monohydrate. Thus, a catalyst A was obtained having as a support only gamma alumina.

Comparative Example B

A catalyst B was prepared similar to that described in Example 1 except that 1 %wt (8 g) acetic acid was used.

Catalyst testing

Catalysts 1, A and B were tested utilizing a catalytically cracked heavy gas oil (CCHGO). The feed contained 87.82 %wt C, 8.70 %wt H, 0.62 %w O, 2.77 %wt S amd 852 ppm N and had a molecular weight of 231. Its 25% boiling point (GLC) was 320 °C and its 90% boiling point was 380 °C. The results of the comparative testing are shown in Table 1.

## TABLE 1

| Example | $Al_2O_3$ $TiO_2$ | % Ni | % Mo | Compacted Bulk Density | Hydro[a] | CCHGO TEST[d] | |
|---|---|---|---|---|---|---|---|
| | | | | | | DeN[b] | DeS[c] |
| A | - | 2.7 | 13.2 | 0.775 | 1.00 | 1.00 | 1.00 |
| 1 | 9/1 | 2.7 | 13.2 | 0.86 | 1.06 | 1.26 | 1.33 |
| B | 9/1 | 2.7 | 13.2 | 0.85 | 0.92 | 0.95 | 0.33 |

a)  Hydrogenation number is a total conversion to hydrogenated product and is based on $H_2$ consumption relative to Example A. Error = ± 0.03.

b)  Denitrification is based on 1st order rate constant relative to Example A. Error = ± 0.10.

c)  Desulphurization is based on 2nd order rate constant relative to Example A. Error = ± 0.10.

d)  Test conditions: 60 bar $H_2$, 343 °C, LHSV = 2.0, $H_2$/oil = 4.0, 0.33-1 mm catalyst, 72 hr. test.

EP 0 199 399 B1

## Claims

1. A hydrocarbon conversion catalyst with improved hydrodenitrification and hydrodesulphurization activity comprising one each of molybdenum or tungsten and of cobalt and/or nickel incorporated into a titania-containing gamma alumina support which support is prepared by
   a) mulling alpha alumina monohydrate, titanium dioxide in a molar ratio of $Al_2O_3:TiO_2$ ranging from 3:1 to 15:1, acetic acid in a concentration ranging from 2.5 parts to 3.5 parts of acid per 100 parts $Al_2O_3$ and sufficient water to provide an extrudable mixture,
   b) extruding the mulled mixture to produce an extrudate, and
   c) drying and calcining the extrudate of step b at a temperature ranging from 400 °C to 800 °C.
2. A catalyst according to claim 1 wherein the molar ratio of $Al_2O_3:TiO_2$ ranges from 5:1 to 12:1.
3. A catalyst according to claim 1 wherein the catalyst contains 1 to 5 per cent by weight cobalt and/or nickel and 10 to 16 per cent by weight molybdenum or 10 to 32 per cent by weight tungsten.
4. A catalyst according to one or more of claims 1-3 wherein the catalyst also contains 0.2-1 mole of phosphorus per mole of molybdenum or tungsten.
5. A process for the hydroconversion of hydrocarbon feeds wherein use is made of a catalyst as claimed in one or more of claims 1-4.
6. A process according to claim 5 wherein the catalyst is used in the hydrodenitrogenation and hydrodesulphurization of heavy gas oil.
7. A process according to claim 5 or 6 wherein use is made of a catalyst which has beeb sulphided.

## Patentansprüche

1. Ein für die Kohlenwasserstoffumwandlung geeigneter Katalysator mit verbesserter Hydrodenitrierung und Hydroentschwefelungsaktivität, umfassend jeweils Molybdän oder Wolfram und Kobalt und/oder Nickel, integriert in einem Titandioxid enthaltenden Gamma-Aluminiumoxid-Träger, welcher Träger hergestellt wurde durch
   a) Behandeln in einem Tellermischer des Muller-Typs (Läufer + Schaufeln) von Alpha-Aluminiumoxidmonohydrat, Titandioxid, in einem Molverhältnis von $Al_2O_3:TiO_2$ im Bereich von 3:1 bis 15:1, Essigsäure in einer Konzentration im Bereich von 2,5 bis 3,5 Teilen Säure pro 100 Teile $Al_2O_3$ und ausreichend Wasser zwecks Erhalt einer extrudierbaren Mischung,
   b) Extrudieren der behandelten Mischung zwecks Herstellung eines Extrudats, und
   c) Trocknen und Calzinieren des Extrudats von Stufe b) bei einer Temperatur im Bereich von 400°C bis 800°C.
2. Ein Katalysator nach Anspruch 1, bei welchem das Molverhältnis von $Al_2O_3:TiO_2$ im Bereich von 5:1 bis 12:1 liegt.
3. Ein Katalysator nach Anspruch 1, wobei dieser 1 bis 5 Gewichtsprozent Kobalt und/oder Nickel und 10 bis 16 Gewichtsprozent Molybdän oder 10 bis 32 Gewichtsprozent Wolfram enthält.
4. Ein Katalysator nach einem oder mehreren der Ansprüche 1 bis 3, wobei dieser auch 0,2 bis 1 Mol Phosphor pro Mol Molybdän oder Wolfram enthält.
5. Ein Verfahren für die Hydroumwandlung von Kohlenwasserstoffausgangsmaterialien, in welchem ein Katalysator, wie in einem oder mehreren der Ansprüche 1 bis 4 beansprucht, eingesetzt wird.
6. Ein Verfahren nach Anspruch 5, in welchem der Katalysator bei der Hydrodenitrierung und Hydroentschwefelung von schwerem Gasöl eingesetzt wird.
7. Ein Verfahren nach Anspruch 5 oder 6, in welchem ein sulfidierter Katalysator eingesetzt wird.

## Revendications

1. Catalyseur de conversion d'hydrocarbures ayant une activité d'hydrodénitrification et d'hydrodésulfuration améliorée comprenant du molybène ou du tungstène et du cobalt et/ou du nickel incorporés dans un support d'alumine gamma contenant de l'oxyde de titane, support que l'on prépare par
   a) broyage d'$\alpha$-alumine monohydratée et de bioxyde de titane, dans un rapport molaire $Al_2O_3:TiO_2$ allant de 3:1 à 15:1, de l'acide acétique en une concentration allant de 2,5 parties à 3,5 parties d'acide acétique pour 100 parties de $Al_2O_3$ et suffisamment d'eau pour donner un mélange extrudable,
   b) extrusion du mélange broyé pour produire un extrudat et
   c) séchage et calcination de l'extrudat de l'étape b à une température allant de 400°C à 800°C.
2. Catalyseur selon la revendication 1, dans lequel le rapport molaire $Al_2O_3:TiO_2$ varie de 5:1 à 12:1.
3. Catalyseur selon la revendication 1, dans lequel le catalyseur contient 1 à 5% en poids de cobalt et/ou de nickel et 10 à 16% en poids de molybdène ou 10 à 32% en poids de tungstène.
4. Catalyseur selon l'une ou plusieurs des revendications 1-3, dans lequel le catalyseur contient aussi 0,2-1 mole de phosphore par mole de molybdène ou de tungstène.

5. Procédé d'hydroconversion de charges d'hydrocarbures, dans lequel on utilise un catalyseur selon l'une ou plus des revendications 1–4.

6. Procédé selon la revendication 4, dans lequel le catalyseur est utilisé dans l'hydrodénitrifaction et l'hydrodésulfuration de gazole lourd.

7. Procédé selon la revendication 5 ou 6, dans lequel on utilise un catalyseur qui a été sulfuré.